# FASCICULE DE BREVET EUROPEEN

(11) **EP 0 879 961 B1**
(45) Date de publication et mention de la délivrance du brevet: **12.07.2000**
(21) Numéro de dépôt: 98401214.6
(22) Date de dépôt: 20.05.1998
(51) Int. Cl.: F04B 39/04, F04B 53/14, F16J 15/52

(54) **Pompe à piston alternatif avec soufflet d'étanchéité**
Kolbenpumpe mit Dichtungsbalg
Reciprocating piston pump with sealing bellows

(30) Priorité: 23.05.1997 FR 9706307
(43) Date de publication de la demande: 25.11.1998
(73) Titulaire: Kremlin, 93240 Stains (FR)
(72) Inventeur: Ballu, Patrick, 51100 Reims (FR)
(74) Mandataire: Loyer, Bertrand

(56) Documents cités:
- WO-A-87/03341
- FR-A- 2 695 965
- FR-A- 2 703 749
- US-A- 2 920 656
- US-A- 3 953 037

## Description

La présente invention concerne une pompe à piston alternatif du type comprenant un corps de pompe ayant au moins une cavité cylindrique avec un orifice d'entrée et un orifice de sortie pour un fluide liquide ou gazeux à pomper, un piston mobile dans la cavité cylindrique, une tige de piston qui passe dans un orifice prévu dans une paroi d'extrémité du corps de pompe et dont une extrémité est reliée au piston et l'autre extrémité à un dispositif d'entraînement à mouvement alternatif, et un soufflet d'étanchéité qui entoure la tige de piston avec un jeu radial et dont les extrémités sont fixées respectivement à la tige de piston et à ladite paroi d'extrémité.

Des pompes ou des compresseurs de ce type sont connues notamment par les brevets français N° 1 447 387 et 2 695 965 et par le brevet US N° 4 975 027. En général, le soufflet d'étanchéité remplit correctement son rôle dans les pompes dont le piston et la tige de piston ont une faible course, comme cela est le cas dans les deux brevets français précités. Par contre, dans le cas des pompes telles que celle qui est décrite dans le brevet US 4 975 027, dans lesquelles le piston et la tige de piston ont une course relativement grande et dans lesquelles, par suite, le soufflet d'étanchéité est relativement long, des défauts d'étanchéité apparaissent à l'usage et le soufflet doit être changé beaucoup plus fréquemment que le soufflet, plus court, des pompes dans lesquelles le piston et la tige de piston ont une faible course.

D'après les recherches et les essais effectués par la Demanderesse, il semble que les défauts d'étanchéité qui apparaissent rapidement à l'usage avec les soufflets relativement longs des pompes à piston alternatif à grande course sont dus aux raisons suivantes. Lorsque le soufflet est alternativement comprimé et étiré axialement, il a tendance, au cours de la phase de compression, à subir une déformation par flambage, c'est-à-dire qu'au lieu de rester bien droit dans son ensemble, il a tendance à prendre une forme courbe. Dans ces conditions, les ondes du soufflet situées du côté concave de la courbe sont plus comprimées que les ondes situées du côté convexe de la courbe. Une telle déformation du soufflet peut résulter d'un défaut de symétrie de la géométrie du soufflet, d'un défaut d'uniformité de son épaisseur de paroi dans les régions des creux et des sommets des ondes du soufflet, ou encore d'un défaut d'homogénéité de la matière du soufflet, à cause des tolérances de fabrication ou de montage. Cette déformation inégale et dissymétrique du soufflet peut entraîner une fatigue plus rapide de la matière de soufflet dans les régions où les ondes sont plus fortement comprimées ou étirées. Cette fatigue provoque à son tour des criques ou des craquelures dans la matière du soufflet. Ces criques ou craquelures entraînent déjà une diminution de l'étanchéité du soufflet et, si celui-ci n'est pas remplacé par un soufflet neuf, elles peuvent conduire rapidement à des ruptures localisées du soufflet aggravant les défauts d'étanchéité. Du fait du flambage, il peut aussi se produire des usures prématurées de certaines ondes du soufflet par frottement sur la tige de piston ou sur le cylindre de la pompe. Ces usures peuvent conduire rapidement à la formation de trous dans le soufflet, donc, là encore, à des défauts d'étanchéité.

Même si le soufflet ne subit pas de déformation par flambage au cours des phases de compression, il peut arriver que les ondes du soufflet ne se déforment pas avec un taux de compression axiale uniforme sur toute la longueur du soufflet, mais que des ondes situées dans certaines parties de la longueur du soufflet soient comprimées plus fortement que des ondes situées dans d'autres parties de la longueur du soufflet. Là encore, des criques ou des ruptures se produisent dans les régions les plus fortement comprimées, réduisant ainsi la durée de vie du soufflet et provoquant les problèmes d'étanchéité susmentionnés.

La présente invention a donc pour but de fournir une pompe à piston alternatif du type défini en préambule, dont le soufflet, en particulier lorsqu'il a une longueur relativement grande, a une durée de vie plus grande que celle des soufflets connus de longueur relativement grande.

A cet effet, la pompe selon l'invention est caractérisée en ce qu'au moins un élément de guidage est associé au soufflet de manière à maintenir le jeu radial entre celui-ci et la tige de piston.

Ainsi, le ou les éléments de guidage empêchent le soufflet de se déformer par flambage et de s'user prématurément par frottement. Le nombre des éléments de guidage dépend bien entendu de la longueur de la course de la tige de piston et, par suite, de la longueur du soufflet. Lorsqu'un unique élément de guidage est prévu, celui-ci est de préférence disposé à peu près au milieu de la longueur du soufflet.

Dans un mode de réalisation préféré de l'invention, la pompe à piston peut en outre comprendre un moyen pour limiter le taux de compression des ondes du soufflet pendant la phase de compression de celui-ci.

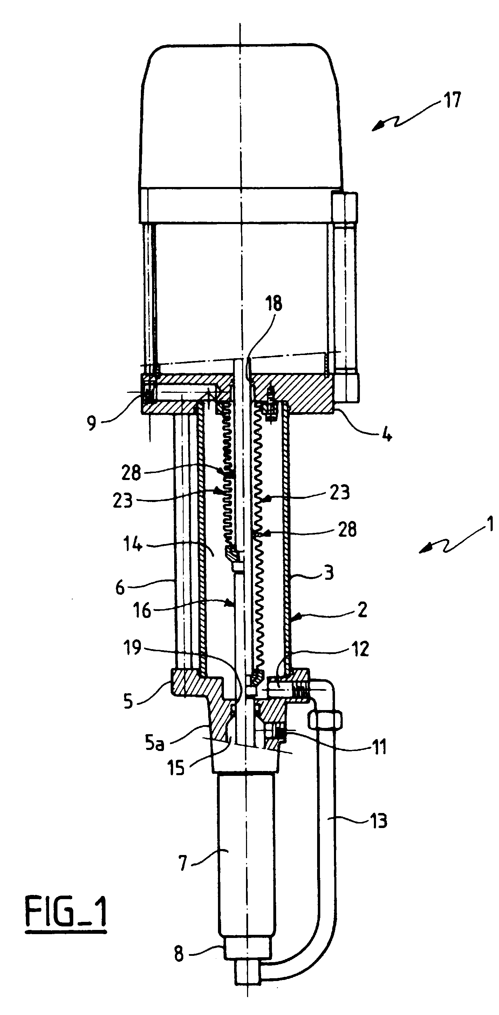

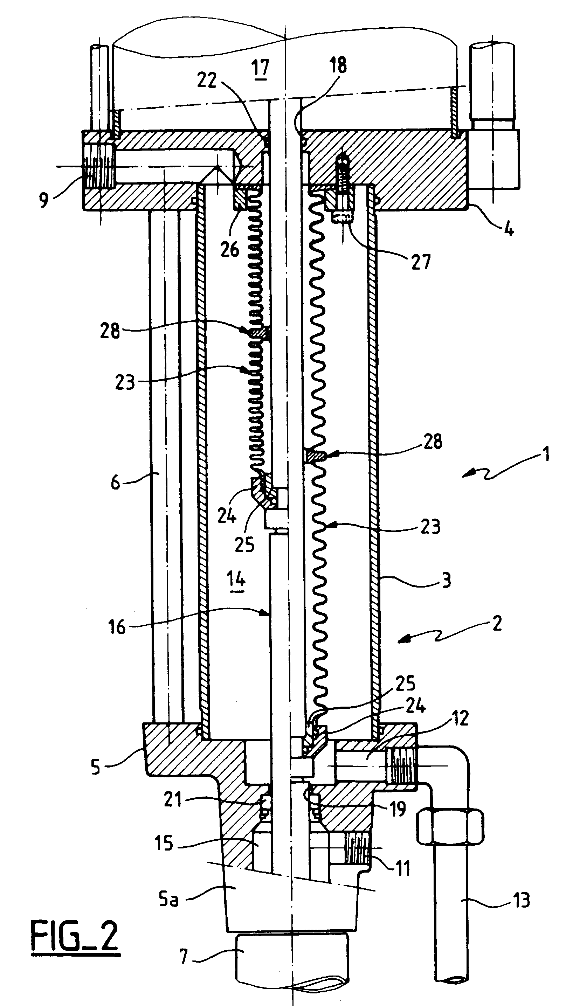

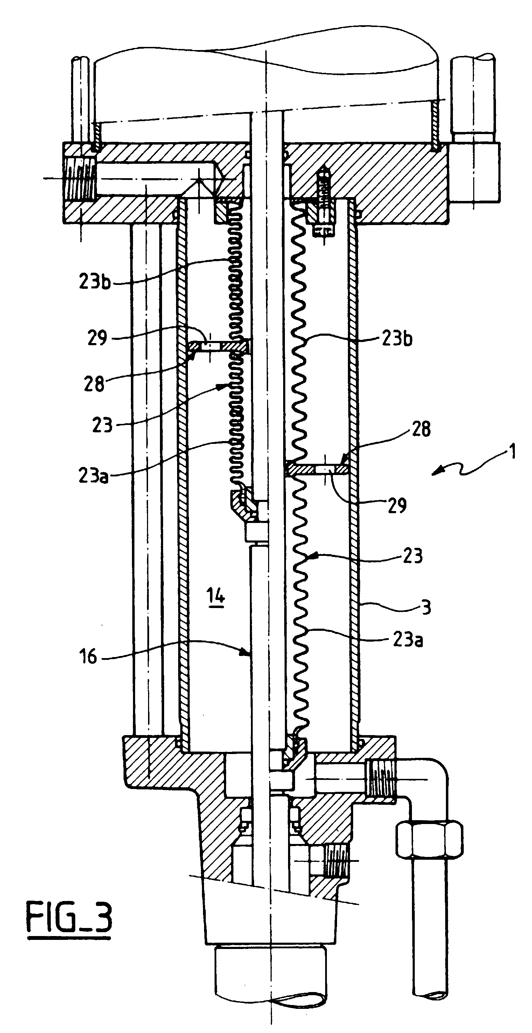

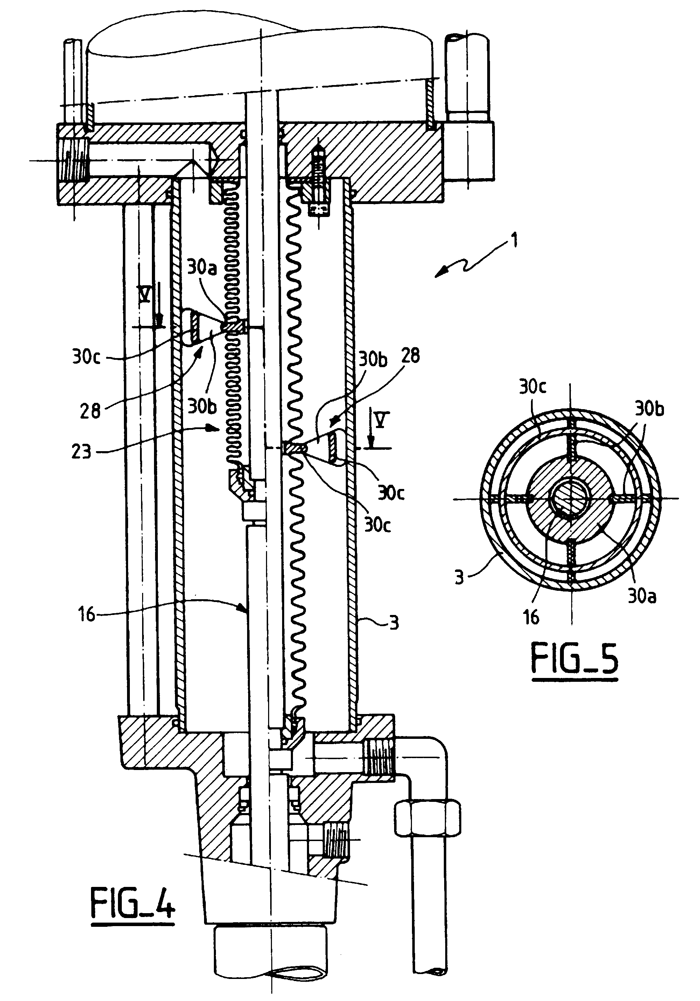

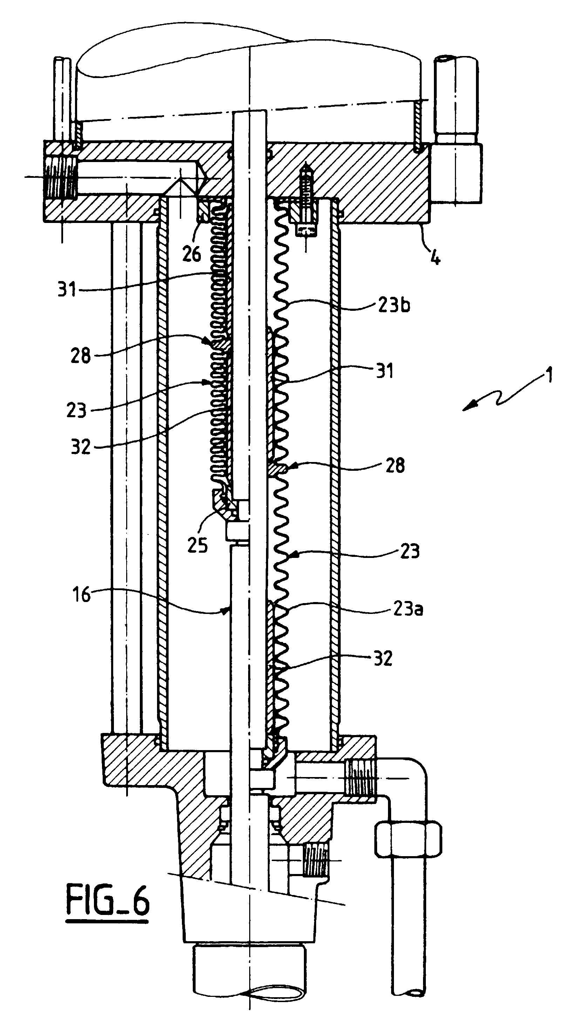

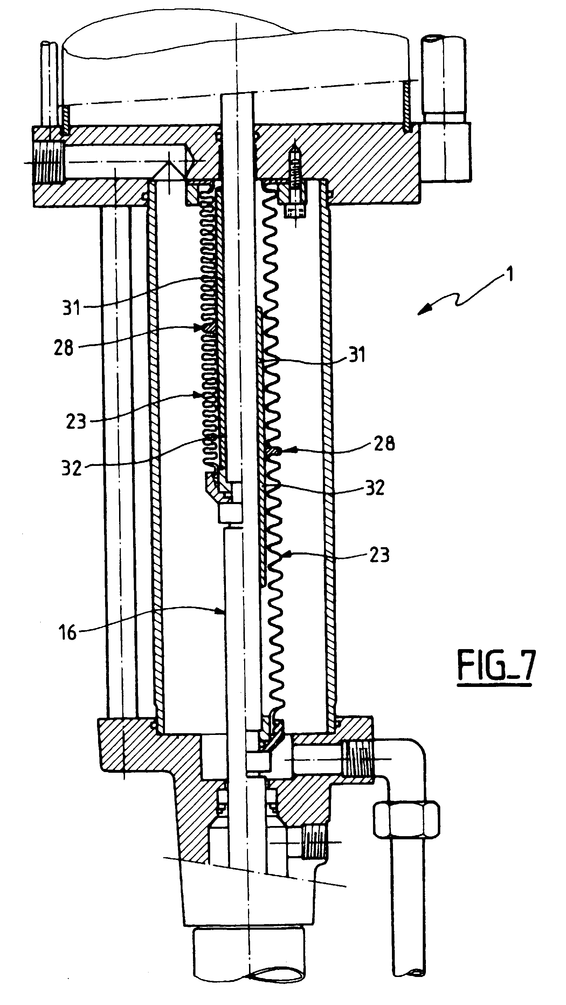

D'autres caractéristiques et avantages de l'invention ressortiront au cours de la description qui va suivre de quelques formes de réalisation de l'invention données à titre d'exemple en référence-aux-dessins annexés sur lesquels :
. la figure 1 montre, en partie en élévation et en partie en coupe axiale, une pompe à piston alternatif à double effet avec soufflet d'étanchéité selon un premier mode de réalisation de l'invention ;
. la figure 2 est une vue partielle à plus grande échelle de la pompe de la figure 1, montrant mieux le soufflet de la pompe et son élément de guidage ;
. la figure 3 est une vue semblable à la figure 2 montrant un second mode de réalisation de l'invention ;
. la figure 4 est une vue semblable à la figure 2 montrant un troisième mode de réalisation de l'invention.
. la figure 5 est une vue en coupe transversale suivant la ligne V-V de la figure 4 ;
. les figures 6 et 7 sont des vues semblables à la figure 2, montrant respectivement un quatrième et un cinquième mode de réalisation de l'invention.

La pompe 1 représentée dans les figures 1 et 2 comporte un corps de pompe 2 qui comprend un premier cylindre 3 dont les deux extrémités sont fermées par des flasques 4 et 5 pressés contre les extrémités du premier cylindre 3 par plusieurs tirants longitudinaux d'assemblage 6 (un seul de ces tirants 6 est visible dans la figure 1) qui sont répartis autour du premier cylindre 3. Le corps de pompe 2 comprend également un deuxième cylindre 7, dont l'une des extrémités est fixée, par exemple vissée, à un moyeu 5a du flasque 5 et dont l'autre extrémité est obturée par un bouchon 8.

Le corps de pompe 2 comporte un orifice d'entrée 9 et un orifice de sortie 11 pour un fluide liquide ou gazeux à pomper. Dans l'exemple de réalisation représenté ici, l'orifice d'entrée 9 est formée dans le flasque 4, mais il pourrait être formé dans le cylindre 3, tandis que l'orifice de sortie 11 est formé dans le moyeu 5a du flasque 5. Un orifice 12 est formé dans le flasque 5 et est raccordé par un tuyau extérieur 13 à un orifice (non montré) formé dans le bouchon 8. Ce dernier contient un clapet d'aspiration non montré. La cavité cylindrique du premier cylindre 3 forme une première chambre d'aspiration 14.

A l'intérieur de la cavité cylindrique du second cylindre 7 se trouve un piston (non montré), qui contient au moins un clapet de refoulement (également non montré) et qui subdivise la cavité cylindrique du second cylindre 7 en deux chambres à volumes variables, à savoir une chambre inférieure située au-dessous du piston, qui constitue une seconde chambre d'aspiration, et une chambre supérieure 15 située au-dessus du piston, qui constitue une chambre de refoulement.

Le piston de la pompe est fixé à l'une des extrémités d'une tige de piston 16, dont l'autre extrémité est reliée à un dispositif d'entraînement à mouvement alternatif 17. Ce dispositif d'entraînement à mouvement alternatif 17 peut être par exemple constitué par un moteur à air comprimé à piston alternatif, auquel cas la tige de piston 16 est reliée au piston (non montré) du moteur à air comprimé 17. A la place du moteur à air comprimé 17 à piston alternatif, il est bien entendu possible d'utiliser d'autres systèmes connus d'entraînement à mouvement alternatif, comme par exemple des systèmes à bielle-manivelle, à excentrique ou à cames.

La tige de piston 16 passe, en y étant guidée, dans des orifices 18 et 19 prévus respectivement au centre du flasque 4 et au centre du flasque 5. Un joint d'étanchéité 21 est prévu pour empêcher le fluide pompé de fuir de la chambre de refoulement 15 vers la première chambre d'aspiration 14 à travers l'orifice 19. De même, un autre joint d'étanchéité 22 est prévu pour empêcher les fuites de fluide de la chambre 14 vers l'extérieur du corps de pompe 2 à travers l'orifice 18 du flasque 4.

Bien qu'il soit souhaitable que les fuites soient réduites au minimum par le joint d'étanchéité 21 afin de ne pas réduire le débit de la pompe 1, la présence éventuelle de faibles fuites à cet endroit, par exemple à cause d'un défaut d'étanchéité du joint 21, n'est pas trop gênante car le fluide qui fuit de la chambre de refoulement 15 à travers l'orifice 19 est récupéré dans la première chambre d'aspiration 14 et recyclé dans le circuit de pompage par l'orifice 12, le tuyau 13 et le clapet d'aspiration qui se trouve dans le bouchon 8. Par contre, il est hautement souhaitable qu'aucune fuite ne puisse se produire de la chambre 14 vers le dispositif d'entraînement 17 à travers l'orifice 18. C'est pourquoi il est usuellement prévu un soufflet d'étanchéité 23, en métal ou en une matière plastique telle que, par exemple, le polyéthylène, qui entoure la tige de piston 16 et dont les extrémités sont fixées de manière étanche respectivement à ladite tige de piston et au flasque 4. Comme cela est mieux visible dans la figure 2, l'extrémité inférieure du soufflet 23 peut comporter un court prolongement cylindrique, qui est pourvu d'un bourrelet périphérique extérieur et qui est tenu et fixé à la tige de piston 16 au moyen de deux bagues de fixation 24 et 25. L'extrémité supérieure du soufflet 23 peut comporter une collerette, qui est fermement serrée entre le flasque 4 et une bague de fixation 26 par des vis de serrage 27, dont une seule est visible dans la figure 2.

Pendant le mouvement alternatif du piston et de la tige de piston 16 de la pompe 1, le soufflet 23 est alternativement comprimé et étiré axialement. Dans la partie gauche des figures 1 et 2, le soufflet 23 est représenté dans un état comprimé correspondant à l'une des deux positions de fin de course du piston de la pompe 1, tandis que dans la partie droite des figures 1 et 2 le soufflet 23 est représenté dans un état étiré correspondant à l'autre position de fin de course du piston de la pompe.

Du fait de la longueur relativement grande du soufflet 23 et en raison des éventuels défauts de symétrie et/ou d'homogénéité de l'épaisseur de paroi et/ou de la matière du soufflet 23 qui sont dus aux tolérances de fabrication et/ou de montage, le soufflet 23 peut subir des déformations par flambage pendant chacune des phases de compression. Afin d'éviter ces déformations, l'invention prévoit d'associer au soufflet 23 au moins un élément de guidage 28. Comme montré dans la figure 2, l'élément de guidage 28 peut être constitué par un élément annulaire, plein et rigide, qui est lié au soufflet 23 et qui peut glisser sur la tige de piston 16. L'élément annulaire servant d'élément de guidage 28 peut être par exemple formé d'une seule pièce avec le soufflet 23. Dans le cas où il est prévu un unique élément de guidage 28, celui-ci peut être situé à peu près au milieu de la longueur du soufflet 23.

La figure 3 montre un second mode de réalisation de l'élément de guidage 28 qui, dans ce cas, est constitué par un disque annulaire qui est lié au soufflet 23, par exemple en étant formé d'une seule pièce avec lui, et qui est en contact glissant, par son bord périphérique extérieur, avec la paroi cylindrique intérieure du cylindre 3. Le disque annulaire servant d'élément de guidage 28 comporte plusieurs trous ou lumières 29 permettant au fluide à pomper de passer librement d'un côté à l'autre du disque 28 dans la première chambre d'aspiration 14. Dans sa partie centrale, le disque 28 formant élément de guidage peut être aussi en contact glissant avec la tige de piston 16. Pour le reste, la pompe 1 montrée dans la figure 3 est identique à celle montrée dans les figures 1 et 2.

Dans la pompe de la figure 3, le disque ajouré 28 joue, en plus de son rôle d'élément de guidage, un rôle d'amortisseur hydraulique du fait que le fluide contenu dans la chambre d'aspiration 14 oppose une résistance à son déplacement. Il en résulte que la partie inférieure 23a et la partie supérieure 23b du soufflet 23 travaillent de manière différente. En effet, pendant la course descendante de la tige de piston 16, le disque ajouré 28 est freiné par le fluide contenu dans la partie inférieure de la chambre 14 et la partie inférieure 23a du soufflet 23 tend à être étirée plus fortement que sa partie supérieure 23b. Inversement, pendant la course montante de la tige de piston 16, le disque ajouré 28 est freiné par le fluide contenu dans la partie supérieure de la chambre 14 et la partie inférieure 23a du soufflet 23 tend à être comprimée plus fortement que sa partie supérieure 23b. Il peut être alors judicieux de donner des flexibilités différentes aux deux parties 23a et 23b du soufflet 23, par exemple en réalisant la partie 23a avec une épaisseur de paroi un peu plus grande que celle de la partie 23b.

Il y a également lieu de noter que, par son déplacement dans la chambre 14, le disque ajouré 28 produit aussi un effet de brassage du fluide contenu dans cette chambre 14, ainsi qu'effet de laminage du fluide passant dans les trous 29. Ces effets peuvent être avantageux pour homogénéiser le fluide à pomper quand celui-ci contient des charges comme cela est par exemple le cas avec certaines peintures.

La figure 4 montre un troisième mode de réalisation de l'élément de guidage 28 qui, dans ce cas, est constitué par un élément annulaire central 30a, plein et rigide, qui peut être par exemple formé d'une seule pièce avec le soufflet 23 et sur lequel sont rapportées, par exemple par soudage ou collage, plusieurs ailettes radiales, par exemple quatre ailettes 30b, dont les extrémités externes sont en contact glissant avec la surface interne du cylindre 3. De préférence, les ailettes 30b ont une forme sensiblement triangulaire de telle façon qu'elles soient plus larges dans leur région de contact avec le cylindre 3 que dans la région où elles sont fixées à l'élément annulaire central 30a, afin d'améliorer le guidage et d'empêcher tout basculement de l'élément 28 autour d'un axe perpendiculaire à l'axe de la tige de piston 16. La section transversale des ailettes 30b peut avoir un profil hydrodynamique et les ailettes peuvent être droites, c'est-à-dire situées dans des plans contenant l'axe de la tige de piston comme montré dans la figure 5. A titre de variante, les ailettes 30b peuvent être disposées en biais ou tordues à la manière des pales d'une hélice si un effet de brassage est recherché. En outre, bien que cela ne soit pas indispensable, les ailettes peuvent être reliées les unes aux autres par un anneau de maintien 30c comme montré dans la figure 5.

La figure 6 montre un quatrième mode de réalisation de la présente invention, qui diffère de celui qui est montré dans la figure 2 en ce que la pompe 1 comprend en outre deux manchons cylindriques 31 et 32, qui entourent coaxialement la tige de piston 16. Le manchon 31 est disposé dans un premier espace annulaire entre l'élément de guidage 28 et l'extrémité du soufflet 23 qui est fixée au flasque 4. Le manchon 32 est disposé dans un second espace annulaire entre l'élément de guidage 28 et l'extrémité du soufflet 23 qui est fixée à la tige de piston 16. Chacun des deux manchons 31 et 32 a de préférence une épaisseur de paroi qui est très légèrement plus faible que le jeu radial entre la tige de piston 16 et le creux des ondes du soufflet 23. En outre, chaque manchon 31, 32 a une longueur axiale qui est sensiblement égale à celle de l'espace annulaire correspondant lorsque la tige de piston 16 est dans une position de fin de course correspondant à l'état comprimé du soufflet 23 comme montré dans la partie gauche de la figure 6.

Dans ces conditions, les manchons 31 et 32 contribuent avec l'élément de guidage 28 à empêcher une déformation du soufflet 23 par flambage pendant chacune des phases de compression. Par conséquent, les manchons 31 et 32 constituent eux aussi des éléments de guidage pour le soufflet 23. Du fait du faible jeu radial entre les ondes du soufflet 23 et la surface externe des manchons 31 et 32, les éventuels frottements sont répartis sur un plus grand nombre d'ondes du soufflet avec une moindre pression de contact, donc sans que les frottements soient localisés et concentrés sur des zones à contraintes accentuées et, par suite, plus vulnérables.

En outre, les manchons 31 et 32 jouent également le rôle d'un moyen de limitation du taux de compression axiale des ondes du soufflet. En effet, si pendant une phase de compression du soufflet 23 les ondes de la partie inférieure 23a sont comprimées plus rapidement et dans une plus grande mesure les ondes de la partie supérieure 23b du soufflet, le manchon 32 poussé par la bague de fixation 25 viendra en butée contre l'élément de guidage 28, empêchant ainsi que les ondes de la partie inférieure 23a du soufflet ne soient comprimées davantage. Ensuite, l'élément de guidage 28, poussé par la bague de fixation 25 et par le manchon 32, obligera les ondes de la partie supérieure 23b du soufflet à se comprimer jusqu'à ce que le manchon 31 atteigne la position montrée dans la partie gauche de la figure 6. Inversement, si au cours de la phase de compression du soufflet 23, les ondes de la partie supérieure 23b du soufflet sont comprimées plus rapidement et dans une plus grande mesure que les ondes de la partie inférieure 23a du soufflet, le manchon 31, poussé par l'élément de guidage 28, viendra en butée contre le flasque 4, empêchant ainsi que les ondes de la partie supérieure 23b du soufflet ne soient comprimées davantage. Ensuite, seules les ondes de la partie inférieure 23a du soufflet continueront à être comprimées jusqu'à ce que le manchon 32 atteigne l'élément de guidage 28. Dans tous les cas on évite ainsi que certaines ondes du soufflet 23 subissent un taux de compression trop important qui, répété à chaque phase de compression, entraînerait une fatigue rapide de la matière du soufflet et, par suite, la formation de criques localisées, voire des ruptures dans la paroi du soufflet, donc des défauts d'étanchéité.

Dans le mode de réalisation de la figure 6, les deux manchons 31 et 32 sont montés axialement flottants sur la tige de piston 16. Toutefois, dans un autre mode de réalisation montré sur la figure 7, les deux manchons 31 et 32 peuvent être réalisés sous la forme d'une seule pièce tubulaire, qui a une longueur axiale sensiblement égale à la somme des longueurs des deux manchons 31 et 32 et qui est fixée dans sa région médiane à l'élément annulaire rigide 28 qui est solidaire du soufflet 23. Par exemple, la pièce tubulaire formant les deux manchons 31 et 32 peut avoir une surface interne cylindrique et une surface externe légèrement biconique de façon à avoir une épaisseur de paroi plus grande dans sa région médiane que dans ses régions d'extrémité. Ainsi, la pièce tubulaire formant les deux manchons 31 et 32 peut être aisément introduite dans le soufflet 23 et fixée par emmanchement à force dans l'élément annulaire 28.

Dans une autre forme de réalisation de l'invention, chacun des deux manchons 31 et 32 peut faire partie intégrante d'une pièce de fixation servant la fixation d'une extrémité correspondante du soufflet 23. Par exemple, le manchon 31 pourrait être formé d'une seule pièce avec une bague de fixation interposée entre la collerette supérieure du soufflet 23 et le flasque 4. De même, le manchon 32 pourrait être réalisé d'une seule pièce avec la bague de fixation 25.

Il est du reste bien entendu que les modes de réalisation de l'invention qui ont été décrits ci-dessus ont été donnés à titre d'exemple purement indicatif et nullement limitatif, et que de nombreuses modifications peuvent être facilement apportées par l'homme de l'art sans pour autant sortir du cadre de l'invention. C'est ainsi notamment qu'au lieu d'être formé d'une seule pièce avec le soufflet 23, le ou les éléments de guidage 28 peuvent être constitués par une ou plusieurs pièces préfabriquées, qui sont ensuite fixées au soufflet. Par exemple, dans le cas où il est prévu un élément de guidage au milieu de la longueur du soufflet, celui-ci peut être constitué par deux parties distinctes 23a et 23b ayant éventuellement des flexibilités différentes et assemblées l'une à l'autre par des pièces de fixation, dont l'une au moins est agencée pour servir également d'élément de guidage. D'autre part, des manchons semblables aux manchons 31 et 32 des figures 6 et 7 peuvent aussi être installés dans la pompe de la figure 3 ou dans celle de la figure 4. En outre, le guidage du soufflet 23 pourrait être assuré uniquement par un ou plusieurs manchons semblables aux manchons 31 et 32 décrits plus haut, c'est-à-dire sans la présence de l'élément de guidage 28 de la figure 2, 3 ou 4. Enfin, bien que la pompe 1 qui a été décrite soit une pompe à piston alternatif à double effet, c'est-à-dire une pompe qui refoule le fluide pompé aussi bien pendant la course aller que pendant la course retour du piston, l'invention est également applicable à des pompes à piston alternatif à simple effet et à grande course, pour autant qu'elles comportent un soufflet d'étanchéité semblable à celui qui a été décrit à propos de la pompe 1.

## Revendications

1. Pompe à piston alternatif comprenant un corps de pompe (2) ayant au moins une cavité cylindrique (14,15) avec un orifice d'entrée (9) et un orifice de sortie (11) pour un fluide liquide ou gazeux à pomper, un piston mobile dans la cavité cylindrique (15), une tige de piston (16) qui passe dans un orifice (18) prévu dans une paroi d'extrémité (4) du corps de pompe (2) et dont une extrémité est reliée au piston et l'autre extrémité à un dispositif d'entraînement (17) à mouvement alternatif, et un soufflet d'étanchéité (23), qui entoure la tige de piston (16) avec un jeu radial et dont les extrémités sont fixées respectivement à la tige de piston (16) et à ladite paroi d'extrémité (4), caractérisée en ce qu'au moins un espaceur (28 ; 31, 32), susceptible de glisser sur la tige de piston (16) et disposé entre les deux extrémités du soufflet (23), est associé au soufflet (23) de manière à maintenir ledit jeu radial entre ledit soufflet (23) et la tige de piston (16).

2. Pompe à piston alternatif selon la revendication 1, caractérisée en ce que l'espaceur (28) est constitué par un élément annulaire plein et rigide, qui est lié au soufflet (23).

3. Pompe à piston alternatif selon la revendication 1, caractérisée en ce que l'espaceur est constitué par un disque annulaire ajouré, qui est lié au soufflet (23), est en contact glissant, au moins par son bord périphérique extérieur, avec la paroi de la cavité cylindrique (14) du corps de pompe (2) et agit comme moyen de brassage pour brasser le fluide contenu dans ladite cavité cylindrique (14).

4. Pompe à piston alternatif selon l'une quelconque des revendications 1 à 3, caractérisée en ce que l'espaceur (28) est formé d'une seule pièce avec le soufflet (23).

5. Pompe à piston alternatif selon la revendication 1, caractérisée en ce que l'espaceur (28) est constitué par un élément annulaire rigide central (30a) qui est lié au soufflet (23) et sur lequel sont rapportées plusieurs ailettes radiales (30b), dont les extrémités externes sont en contact glissant avec la paroi de la cavité cylindrique (14) du corps de pompe (2).

6. Pompe à piston alternatif selon l'une quelconque des revendications 1 à 5, caractérisée en ce que l'espaceur (28) est situé à peu près au milieu de la longueur du soufflet (23).

7. Pompe à piston alternatif selon la revendication 1, caractérisée en ce que l'espaceur (31, 32) est constitué par au moins un manchon cylindrique entourant la tige de piston (16).

8. Pompe à piston alternatif selon l'une quelconque des revendications 1 à 6, caractérisée en ce qu'elle comprend un moyen (31,32) pour limiter le taux de compression axiale des ondes du soufflet (23) et pour répartir les frottements des ondes du soufflet (23) sur la tige de piston (16).

9. Pompe à piston alternatif selon la revendication 8, caractérisée en ce que ledit moyen limiteur de taux de compression et répartiteur de frottements est constitué par deux manchons cylindriques (31 et 32) coaxiaux à la tige de piston (16), l'un (31) des deux manchons étant disposé dans un premier espace annulaire entre l'espaceur (28) et l'une des extrémités du soufflet (23), l'autre manchon (32) étant disposé dans un second espace annulaire entre l'espaceur (28) et l'autre extrémité du soufflet, et chacun des deux manchons (31,32) ayant une longueur axiale qui est sensiblement égale à celle de l'espace annulaire correspondant lorsque le piston et la tige de piston (16) sont dans leur position de fin de course correspondant à un état comprimé du soufflet (23).

10. Pompe à piston alternatif selon la revendication 9, caractérisée en ce que les deux manchons (31 et 32) sont montés axialement flottants sur la tige de piston (16).

11. Pompe à piston alternatif selon la revendication 9, caractérisée en ce que les deux manchons (31 et 32) sont réalisés sous la forme d'une seule pièce cylindrique qui a une longueur axiale sensiblement égale à la somme des longueurs des deux manchons et qui est fixée dans sa région médiane à un élément annulaire rigide (28) qui est solidaire du soufflet (23).

12. Pompe à piston alternatif selon la revendication 9, caractérisée en ce que chacun des deux manchons (31 et 32) fait partie d'une pièce de fixation servant à la fixation d'une extrémité correspondante du soufflet (23).

## Patentansprüche

1. Kolbenpumpe mit einem Pumpengehäuse (2), welches aufweist: mindestens einen zylindrischen Hohlraum (14, 15) mit einer Eintrittsöffnung (9) und einer Austrittsöffnung (11) für ein zu pumpendes flüssiges oder gasförmiges Fluid; einen beweglichen Kolben in dem zylindrischen Hohlraum (15); eine Kolbenstange (16), die durch eine in einer Endwand (4) des Pumpengehäuses (2) vorgesehene Öffnung (18) verläuft und bei der ein Ende mit dem Kolben und das andere Ende mit einer sich hin und her bewegenden Antriebsvorrichtung (17) verbunden ist; und einen Dichtungsbalg (23), der die Kolbenstange (16) mit radialem Spiel umgibt und dessen Enden an der Kolbenstange (16) bzw. an der Endwand (4) befestigt sind, dadurch gekennzeichnet, daß mindestens ein Abstandshalter (28; 31, 32), der auf der Kolbenstange (16) gleiten kann und zwischen den beiden Enden des Balgs (23) angeordnet ist, dem Balg (23) derart zugeordnet ist, daß das radiale Spiel zwischen dem Balg (23) und der Kolbenstange (16) beibehalten wird.

2. Kolbenpumpe nach Anspruch 1, dadurch gekennzeichnet, daß der Abstandshalter (28) aus einem massiven und starren ringförmigen Element besteht, das mit dem Balg (23) verbunden ist.

3. Kolbenpumpe nach Anspruch 1, dadurch gekennzeichnet, daß der Abstandshalter aus einer gelochten ringförmigen Scheibe besteht, die mit dem Balg (23) verbunden ist, über mindestens ihren äußeren Umfangsrand mit der Wand des zylindrischen Hohlraums (14) des Pumpengehäuses (2) in gleitender Berührung ist und als Durchmischungsmittel wirkt, um das in dem zylindrischen Hohlraum (14) enthaltene Fluid zu durchmischen.

4. Kolbenpumpe nach einem der Ansprüche 1 bis 3, dadurch gekennzeichnet, daß der Abstandshalter (28) mit dem Balg (23) einstückig ausgebildet ist.

5. Kolbenpumpe nach Anspruch 1, dadurch gekennzeichnet, daß der Abstandshalter (28) aus einem mittigen starren Ringelement (30a) besteht, das mit dem Balg (23) verbunden ist und auf dem mehrere radiale Rippen (30b) aufgesetzt sind, deren äußere Enden mit der Wand des zylindrischen Hohlraums (14) des Pumpengehäuses (2) in gleitender Berührung sind.

6. Kolbenpumpe nach einem der Ansprüche 1 bis 5, dadurch gekennzeichnet, daß der Abstandshalter (28) ungefähr in der Mitte der Länge des Balgs (23) angeordnet ist.

7. Kolbenpumpe nach Anspruch 1, dadurch gekennzeichnet, daß der Abstandshalter (31, 32) aus mindestens einer zylindrischen Hülse besteht, welche die Kolbenstange (16) umgibt.

8. Kolbenpumpe nach einem der Ansprüche 1 bis 6, dadurch gekennzeichnet, daß sie ein Mittel (31, 32) aufweist, um das axiale Kompressionsverhältnis der Wellungen des Balgs (23) zu begrenzen und um die Reibung der Wellungen des Balgs (23) auf der Kolbenstange (16) zu verteilen.

9. Kolbenpumpe nach Anspruch 8, dadurch gekennzeichnet, daß das Kompressionsverhältnisbegrenzungs- und Reibungsverteilungs-Mittel aus zwei zylindrischen Hülsen (31 und 32) besteht, die koaxial zur Kolbenstange (16) sind, wobei die eine (31) der beiden Hülsen in einem ersten ringförmigen Raum zwischen dem Abstandshalter (28) und einem der Enden des Balgs (23) angeordnet ist und die andere Hülse (32) in einem zweiten ringförmigen Raum zwischen dem Abstandshalter (28) und dem anderen Ende des Balgs angeordnet ist, und wobei jede der beiden Hülsen (31, 32) eine axiale Länge hat, die im wesentlichen gleich derjenigen des entsprechenden ringförmigen Raums ist, wenn der Kolben und die Kolbenstange (16) in ihrer Hubende-Stellung sind, welche einem komprimierten Zustand des Balgs (23) entspricht.

10. Kolbenpumpe nach Anspruch 9, dadurch gekennzeichnet, daß die beiden Hülsen (31 und 32) auf der Kolbenstange (16) axial schwebend gelagert sind.

11. Kolbenpumpe nach Anspruch 9, dadurch gekennzeichnet, daß die beiden Hülsen (31 und 32) in Form eines einzigen zylindrischen Teils gefertigt sind, das eine axiale Länge hat, die im wesentlichen gleich der Summe der Längen der beiden Hülsen ist und das in seinem mittleren Bereich an einem starren Ringelement (28) befestigt ist, welches mit dem Balg (23) einstückig ist.

12. Kolbenpumpe nach Anspruch 9, dadurch gekennzeichnet, daß jede der beiden Hülsen (31 und 32) Teil eines Befestigungsstücks ist, das zur Befestigung eines entsprechenden Endes des Balgs (23) dient.

## Claims

1. A reciprocating piston pump comprising a pump body (2) having at least one cylindrical cavity (14, 15) with an inlet orifice (9) and an outlet orifice (11) for a liquid or gaseous fluid which is to be pumped, a piston which moves within the cylindrical cavity (15), a piston rod (16) which passes into an orifice (18) provided in an end wall (4) of the pump body (2) and one end of which is connected to the piston and the other end to a reciprocating drive device (17), and a sealing bellows (23) which surrounds the piston rod (16) with radial clearance and the ends of which are fastened respectively to the piston rod (16) and to said end wall (4), characterised in that at least one spacer (28; 31, 32) capable of sliding on the piston rod (16) and arranged between the two ends of the bellows (23) is associated with the bellows (23) so as to maintain said radial clearance between said bellows (23) and the piston rod (16).

2. A reciprocating piston pump according to Claim 1, characterised in that the spacer (28) is formed by a solid, rigid annular element which is linked to the bellows (23).

3. A reciprocating piston pump according to Claim 1, characterised in that the spacer is formed by a perforated annular disc which is connected to the bellows (23), is in sliding contact, at least via its outer peripheral edge, with the wall of the cylindrical cavity (14) of the pump body (2) and acts as a stirring means for stirring the fluid contained in said cylindrical cavity (14).

4. A reciprocating piston pump according to any one of Claims 1 to 3, characterised in that the spacer (28) is formed of a single piece with the bellows (23).

5. A reciprocating piston pump according to Claim 1, characterised in that the spacer (28) is formed by a central rigid annular element (30a) which is linked to the bellows (23) and on which are fastened a plurality of radial fins (30b), the outer ends of which are in sliding contact with the wall of the cylindrical cavity (14) of the pump body (2).

6. A reciprocating piston pump according to any one of Claims 1 to 5, characterised in that the spacer (28) is located more or less in the centre of the length of the bellows (23).

7. A reciprocating piston pump according to Claim 1, characterised in that the spacer (31, 32) is formed by at least one cylindrical sleeve surrounding the piston rod (16).

8. A reciprocating piston pump according to any one of Claims 1 to 6, characterised in that it comprises a means (31, 32) for limiting the amount of axial compression of the undulations of the bellows (23) and for distributing the friction of the undulations of the bellows (23) on the piston rod (16).

9. A reciprocating piston pump according to Claim 8, characterised in that said means for limiting the amount of compression and for distributing the friction is formed by two cylindrical sleeves (31 and 32) coaxial to the piston rod (16), one (31) of the two sleeves being arranged in a first annular space between the spacer (28) and one of the ends of the bellows (23), the other sleeve (32) being arranged in a second annular space between the spacer (28) and the other end of the bellows, and each of the two sleeves (31, 32) having an axial length which is substantially equal to that of the corresponding annular space when the piston and the piston rod (16) are in their end-of-stroke position corresponding to a compressed state of the bellows (23).

10. A reciprocating piston pump according to Claim 9, characterised in that the two sleeves (31 and 32) are mounted to float axially on the piston rod (16).

11. A reciprocating piston pump according to Claim 9, characterised in that the two sleeves (31 and 32) are made in the form of a single cylindrical part which has an axial length substantially equal to the total of the lengths of the two sleeves and which is fixed in its median region to a rigid annular element (28) which is integral with the bellows (23).

12. A reciprocating piston pump according to Claim 9, characterised in that each of the two sleeves (31 and 32) forms part of a fixing part serving to fix a corresponding end of the bellows (23).
